# EUROPEAN PATENT SPECIFICATION

(11) **EP 3 624 329 B1**
(45) Date of publication and mention of the grant of the patent: **05.05.2021**
(21) Application number: 19196761.1
(22) Date of filing: 11.09.2019
(51) Int. Cl.: H02P 1/46, H02P 6/15, H02P 6/22, H02P 11/06, H02P 25/03, B60S 1/00

(54) **BRUSHLESS MOTOR, METHOD FOR CONTROLLING THE SAME AND METHOD FOR CONTROLLING WIPER DEVICE**
BÜRSTENLOSER MOTOR, VERFAHREN ZU DESSEN STEUERUNG UND VERFAHREN ZUR STEUERUNG EINER WISCHERVORRICHTUNG
MOTEUR SANS BALAI, SON PROCÉDÉ DE COMMANDE ET PROCÉDÉ DE COMMANDE D'UN DISPOSITIF D'ESSUIE-GLACE

(30) Priority: 14.09.2018 JP 2018172731; 02.08.2019 JP 2019143185
(43) Date of publication of application: 18.03.2020
(73) Proprietor: MITSUBA Corporation, Kiryu-shi Gunma 376-8555 (JP)
(72) Inventor: IKEDA, TAKESHI, Kiryu-shi, Gunma 376-8555 (JP); MOCHIDA, ATSUSHI, Kiryu-shi, Gunma 376-8555 (JP); HOSHINO, HIROKI, Kiryu-shi, Gunma 376-8555 (JP); TANAAMI, TETSUYOSHI, Kiryu-shi, Gunma 376-8555 (JP); YOKOSAKA, KOSUKE, Kiryu-shi, Gunma 376-8555 (JP); NEGISHI, NORIAKI, Kiryu-shi, Gunma 376-8555 (JP); YOSHIMOTO, TSUYOSHI, Kiryu-shi, Gunma 376-8555 (JP); ITO, HONOKA, Kiryu-shi, Gunma 376-8555 (JP)
(74) Representative: Cabinet Laurent & Charras

(56) References cited:
- WO-A1-2018/150908
- JP-A- 2017 103 925
- JP-B2- 4 615 885

## Description

### BACKGROUND OF THE INVENTION

### Field of the Invention

The present invention relates to a brushless motor, a method for controlling the same a method for controlling a wiper device.

### Description of Related Art

Patent Document 1 (Japanese Patent Application, Publication No. 2017-103925) discloses a control method in which one half of the duty is output in an off phase (which corresponds to a phase open period and is hereinafter sometimes referred to as a free phase) among three phases in brushless motor driving. Hereinafter, this control method is referred to as freeless driving/energization.

Although the freeless driving/energization method reduces motor operation noise, there is a problem in that motor properties are degraded as compared with a rectangular wave energization method.

Another control method is disclosed in document JP 4 615885 B2 or in WO2018/150908 A1.

### SUMMARY OF THE INVENTION

Therefore, if a wiper device for swinging wiper arms is designed using brushless motors that perform the freeless driving/energization method described in Patent Document 1, there is a possibility that the wipers will not be able to perform wiping when the brushless motors are in a high load state. That is, in the freeless driving/energization method described in Patent Document 1, motor properties are degraded as compared with a rectangular wave energization method and therefore there is a possibility that the wipers cannot perform wiping in a high load state.

It is an object of the present invention to provide a brushless motor, a method for controlling the same and a method for controlling a wiper device, which can appropriately switch between freeless energization control and rectangular wave energization control.

The present invention is defined by independent apparatus claim 1 and independent method claim 4.

An aspect of the present invention is a brushless motor including a stator including three-phase windings, a rotor including a permanent magnet, the rotor being configured to rotate in a state facing the stator, an inverter including a plurality of switching elements, the inverter being configured to conduct an alternating current to the three-phase windings by turning on or off the plurality of switching elements, and a controller configured to control on or off states of the plurality of switching elements by switching an energization pattern, which represents changes in energization states of phases of the three-phase windings according to rotation of the rotor, to a freeless energization pattern or a rectangular wave energization pattern, wherein the controller is configured to switch the energization pattern to the freeless energization pattern when an accumulated load value determined according to a load on the rotor is less than a first predetermined threshold value and switch the energization pattern to the rectangular wave energization pattern when the accumulated load value is equal to or greater than the first predetermined threshold value.

The rectangular wave energization pattern includes an energization pattern that may be a combination of a first state that is a state in which at least one of the switching elements is continuously on, a second state that is a state in which at least another one of the switching elements is continuously off, and a third state that is a state in which at least still another one of the switching elements is PWM controlled, and the freeless energization pattern includes an energization pattern that is a combination of a fourth state that is a state in which at least one of the switching elements is PWM controlled by a PWM signal of a maximum duty ratio that is greater than that of PWM control in the third state, a fifth state that is a state in which at least another one of the switching elements is PWM controlled by a PWM signal of a minimum duty ratio that is smaller than that of PWM control in the third state, and a sixth state that is a state in which at least still another one of the switching elements is PWM controlled by a PWM signal of an intermediate duty ratio between the maximum duty ratio and the minimum duty ratio.

According to the present invention, the rectangular wave energization pattern includes an energization pattern that is a combination of a first state that is a state in which at least one of the switching elements is continuously on, a second state that is a state in which at least another one of the switching elements is continuously off, and a third state that is a state in which at least still another one of the switching elements is PWM controlled, and the freeless energization pattern includes an energization pattern that is a combination of a seventh state that is a state in which at least one of the switching elements is continuously on, an eighth state that is a state in which at least another one of the switching elements is PWM controlled by a PWM signal of an instruction duty ratio that is input from the outside, and a ninth state that is a state in which at least still another one of the switching elements is PWM controlled by a PWM signal of a duty ratio that is one half of the instruction duty ratio.

An aspect of the present invention is the above brushless motor, wherein the controller is configured to switch the energization pattern to the freeless energization pattern when the accumulated load value becomes less than a second predetermined threshold value that is smaller than the first predetermined threshold value after the accumulated load value has become equal to or greater than the first predetermined threshold value.

An aspect of the present invention is the above brushless motor, wherein the accumulated load value is obtained by detecting a power supply voltage supplied to the inverter, a rotational speed of the rotor, and a duty ratio of a PWM signal in a PWM controlled state among energization states included in the freeless energization pattern or the rectangular wave energization pattern at predetermined intervals and by accumulating a load point value calculated on the basis of the three detected values.

An aspect of the present invention is a method for controlling a brushless motor, the brushless motor including a stator including three-phase windings, a rotor including a permanent magnet, the rotor being configured to rotate in a state facing the stator, an inverter including a plurality of switching elements, the inverter being configured to conduct an alternating current to the three-phase windings by turning on or off the plurality of switching elements, and a controller configured to control on or off states of the plurality of switching elements by switching an energization pattern, which represents changes in energization states of phases of the three-phase windings according to rotation of the rotor, to a freeless energization pattern or a rectangular wave energization pattern, the method including the controller switching the energization pattern to the freeless energization pattern when an accumulated load value determined according to a load on the rotor is less than a first predetermined threshold value, and switching the energization pattern to the rectangular wave energization pattern when the accumulated load value is equal to or greater than the first predetermined threshold value.

An aspect of the present invention is a method for controlling a wiper device, the wiper device including: the above-described brushless motor; a wiper arm that is swingably moved by the brushless motor; and a wiper blade connected to the wiper arm to reciprocally wipe a wiping area of a vehicle, the method including: switching an energization pattern when a position of the wiper blade is at a reversing position in the wiping area.

An aspect of the present invention is the above method, wherein the controller counts the number of wipes of the wiper blades in the rectangular wave energization pattern, and switches from the rectangular wave energization pattern to the freeless energizing pattern when the number of wipes is equal to or greater than a predetermined value.

According to the present invention, it is possible to appropriately switch between the freeless energization control and the rectangular wave energization control according to the accumulated load value determined according to the load on the rotor.

### BRIEF DESCRIPTION OF THE DRAWINGS

FIG. 1 is a schematic view showing a wiper device according to an embodiment of the present invention.
FIG. 2 is a configuration diagram showing an exemplary configuration of a brushless motor 1a shown in FIG. 1.
FIG. 3 is a block diagram showing the configuration of a high load detection processing system in a controller 12.
FIG. 4 is an explanatory view showing a configuration of a load point map 12b.
FIG. 5 is an explanatory view showing a configuration of a load point map 12b.
FIG. 6 is an explanatory view showing the relationship between an aggregate point value (accumulated load value), threshold values, and the operation state of the brushless motor 1a.
FIG. 7 is a diagram illustrating examples of rectangular wave energization patterns.
FIG. 8 is a table putting together the examples of rectangular wave energization patterns shown in FIG. 7.
FIG. 9 is a diagram illustrating examples of freeless energization patterns according to a first embodiment.
FIG. 10 is a table putting together the examples of freeless energization patterns shown in FIG. 9.
FIG. 11 is a diagram illustrating examples of freeless energization patterns according to a second embodiment.
FIG. 12 is a table putting together the examples of freeless energization patterns shown in FIG. 11.
FIG. 13 is a flowchart showing an example of an energization control switching operation of the controller 12.
FIG. 14 is a flowchart showing another example of an energization control switching operation of the controller 12.

### DETAILED DESCRIPTION OF THE INVENTION

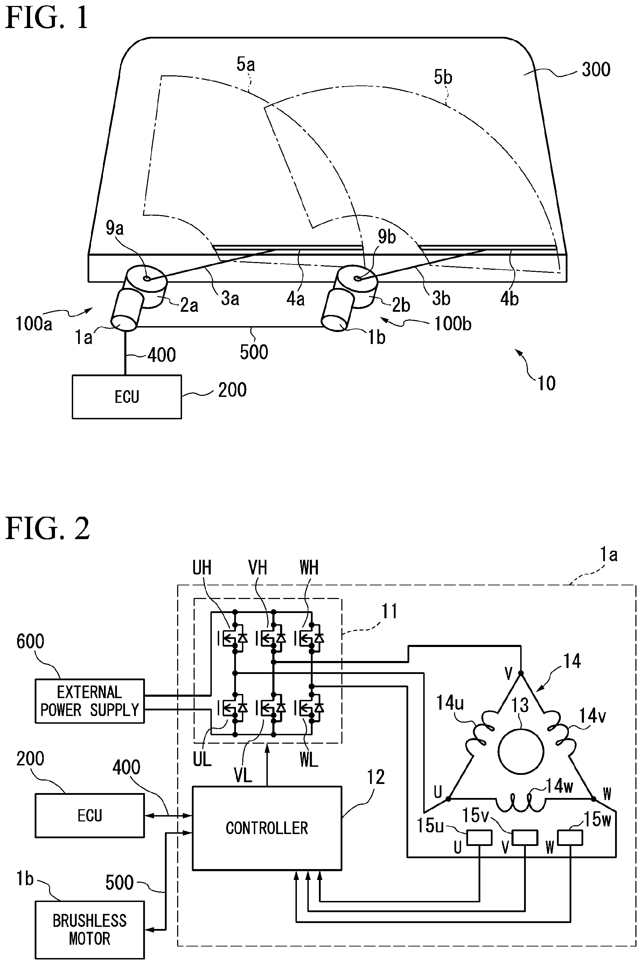

Hereinafter, embodiments of the present invention will be described with reference to the drawings. FIG. 1 is a schematic view showing an entire configuration of a wiper device 10 according to an embodiment of the present invention. The wiper device 10 shown in FIG. 1 has a wiper arm 3a on the driver's seat side and a wiper arm 3b on the passenger's seat side that are provided swingably on a vehicle body. A wiper blade 4a on the driver's seat side and a wiper blade 4b on the passenger's seat side are attached to the wiper arms 3a and 3b, respectively. The wiper blades 4a and 4b are in contact with a front windshield 300 while being pressed against it by spring members or the like (not shown) provided inside the wiper arms 3a and 3b. The vehicle body is provided with two wiper shafts 9a and 9b and the wiper arms 3a and 3b are attached at their proximal ends to the wiper shafts 9a and 9b, respectively.

The wiper device 10 is provided with two motor devices 100a and 100b to swing the wiper arms 3a and 3b. In the wiper device 10, the two motor devices 100a and 100b are synchronized to perform forward and reverse control, such that the wiper blades 4a and 4b swing in wiping ranges 5a and 5b indicated by alternate long and short dashed lines. The motor device 100a includes a brushless motor (hereinafter sometimes simply referred to as a motor) 1a and a deceleration mechanism 2a. The motor device 100b includes a brushless motor 1b and a deceleration mechanism 2b. The brushless motor 1a is connected to an ECU 200, which is a controller for the vehicle, via an in-vehicle local area network (LAN) 400. Switch information such as wiper switch ON/OFF, Lo, Hi, and INT (intermittent operation), engine start information, vehicle speed information, and the like are input from the ECU 200 to the brushless motor 1a via the in-vehicle LAN 400. A communication line 500 is connected between the brushless motors 1a and 1b. In the wiper device 10 shown in FIG. 1, the brushless motors 1a and 1b cooperate to control the operation of the wiper blades 4a and 4b by transmitting and receiving predetermined information via the communication line 500. The basic configurations of the brushless motors 1a and 1b may be identical while the contents of some parts of programs or the like thereof differ.

Next, an exemplary configuration of the brushless motor 1a shown in FIG. 1 will be described with reference to FIG. 2. The brushless motor 1a includes an inverter 11, a controller 12, a rotor 13, a stator 14, and Hall sensors 15u, 15v and 15w.

The stator 14 has a stator core (not shown) and windings 14u, 14v and 14w wound through a plurality of slots of the stator core. The windings 14u, 14v and 14w are delta connection three-phase windings. The connection is not limited to delta connection and may be star connection.

The rotor 13 has a rotation shaft and a plurality of permanent magnets fixed along the circumferential direction of the rotation shaft and rotates in a state in which it is disposed to face the inside of the stator 14. The rotor 13 may be of an outer rotor type structure in which it is disposed outside the stator 14. There is no limitation on the structure of the rotor 13 and the stator 14. However, for example, these may be of a four-pole six-slot structure in which the number of permanent magnets with N and S poles is four and the number of slots of the stator 14 is six.

The Hall sensors (position detectors) 15u, 15v and 15w detect the rotation position of a magnet fixed on the rotation shaft of the rotor, which has a plurality of magnetic poles, and rotation positions of a plurality of permanent magnets fixed to the rotor 13 using Hall elements, and output the detection results. The Hall sensors 15u, 15v and 15w detect positions that are 120° away from each other in electrical angle. The Hall sensors 15u, 15v and 15w output, for example, digital signals of a high level (H level) or a low level (L level), into which analog signals of magnitudes proportional to magnetic fields generated using the Hall elements have been converted through a comparator, to the controller 12. In the present embodiment, the Hall sensor 15u outputs a digital signal (a position detection signal Hu) corresponding to the U phase, the Hall sensor 15v outputs a digital signal (a position detection signal Hv) corresponding to the V phase, and the Hall sensor 15w outputs a digital signal (a position detection signal Hw) corresponding to the W phase. The Hall sensors 15u, 15v and 15w of the present embodiment are provided with respect to the rotor 13 such that the advanced angle is 30° in electrical angle when the output of the inverter 11 has changed immediately at each position at which the level of the output signal of the Hall sensor 15u, 15v or 15w changes, i.e., at each position at which an edge has occurred in the output signal.

The inverter 11 includes a plurality of switching elements UH, UL, VH, VL, WH and WL and conducts an alternating current to the three-phase windings 14u, 14v and 14w by turning on or off the plurality of switching elements UH, UL, VH, VL and WH and WL in a predetermined combination using an external power supply 600 as a DC power supply. The external power supply 600 includes, for example, a battery, a capacitor or the like mounted on the vehicle. In the example shown in FIG. 2, the six switching elements UH, UL, VH, VL, WH and WL are formed of n-channel metal oxide semiconductor field effect transistors (MOSFETs). Drains of the switching elements UH, VH and WH are commonly connected to a positive electrode of the external power supply 600. A source of the switching element UH is connected to a connection terminal between the windings 14u and 14w (referred to as a U-phase terminal) and a drain of the switching element UL. A source of the switching element VH is connected to a connection terminal between of the windings 14v and 14u (referred to as a V-phase terminal) and a drain of the switching element VL. A source of the switching element WH is connected to a connection terminal between of the windings 14w and 14v (referred to as a W-phase terminal) and a drain of the switching element WL. Sources of the switching elements UL, VL and WL are commonly connected to a negative electrode (for example, a ground terminal) of the external power supply 600. On/off operations of the switching elements UH, UL, VH, VL, WH and WL are controlled by the controller 12.

The controller 12 includes, for example, a microcomputer including a central processing unit (CPU), a random access memory (RAM), a read only memory (ROM) or the like and peripheral circuits and controls the switching elements UH, UL, VH, VL, WH and WL. The controller 12 also transmits and receives predetermined information between the ECU 200 and the brushless motor 1b.

Further, the controller 12 switches an energization pattern, which represents changes in energization states of the three-phase windings 14u, 14v and 14w according to the rotation of the rotor 13, to a first energization pattern (the freeless energization pattern) or a second energization pattern (the rectangular wave energization pattern) to control the on/off states of the plurality of switching elements UH, UL, VH, VL, WH and WL. That is, the controller 12 outputs drive signals to be applied to the gates of the switching elements UH, UL, VH, VL, WH and WL to control the energization pattern of the switching elements UH, UL, VH, VL, WH and WL on the basis of the position detection signals Hu, Hv and Hw.

In the brushless motor 1a, the rotational speed of the rotor 13 (also referred to as a motor speed) is detected from the position detection signals Hu, Hv and Hw (motor pulses) which are output signals of the Hall sensors (position detectors) 15u, 15v and 15w. Further, when controlling an on or off state of each of the plurality of switching elements UH, UL, VH, VL, WH and WL, the controller 12 controls the duty ratio for each fixed cycle (also referred to as a duty output value) using pulse width modulation (PWM) such that the rotational speed of the rotor 13 has a predetermined target value. The duty ratio is the on time in one cycle of a PWM signal output by the controller 12 divided by the sum of the on time and the off time.

Further, the controller 12 performs a process of detecting a high load on the rotor 13 on the basis of the rotational speed and the duty ratio of the rotor 13 calculated and set in the above manner. In this control process, the controller 12 calculates and accumulates a load point value from the motor speed (the rotational speed of the rotor 13) and the duty ratio and determines that the rotor 13 is in a high load state when the aggregate point value (accumulated load value) has exceeded a predetermined reference value, and then performs a process of switching the current energization pattern from the first current energization pattern (freeless current energization pattern) to the second current energization pattern (rectangular wave current energization pattern). The high load detection process will be described below.

The high load detection method described below is based on the method described in Japanese Patent No. 4615885 patented to Mitsuba Co., Ltd.

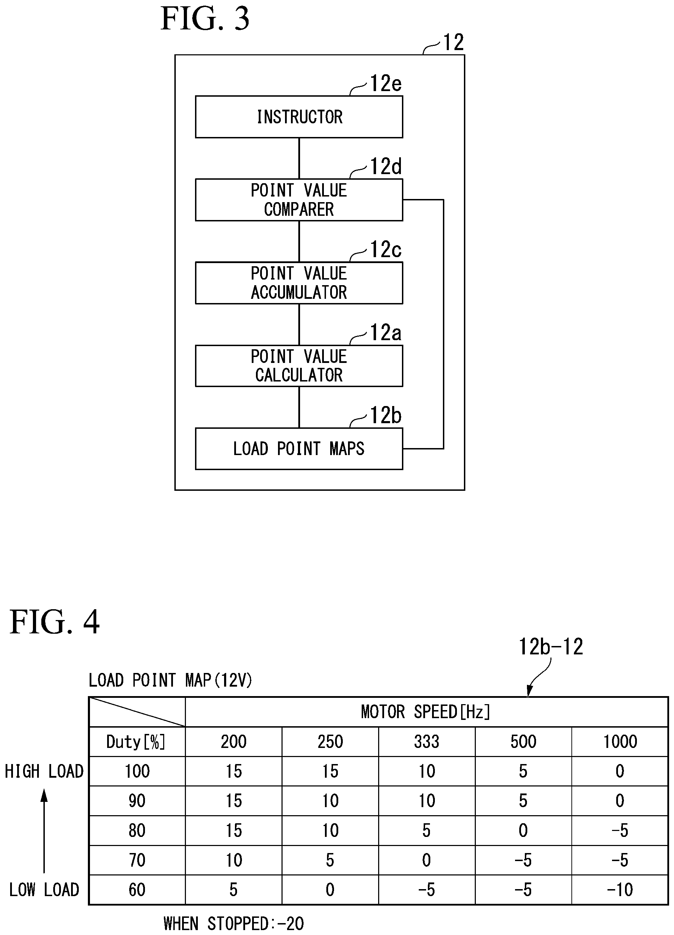

FIG. 3 is a block diagram showing the configuration of a high load detection processing system in the controller 12. As shown in FIG. 3, the controller 12 is first provided with a point value calculator 12a that calculates a load point value from the motor speed (the rotational speed of the rotor 13) and the duty ratio. The point value calculator 12a accesses load point maps 12b stored in advance in the ROM of the controller 12 to calculate a load point value.

A point value accumulator 12c that accumulates the calculated load point value is provided downstream of the point value calculator 12a. The controller 12 is also provided with a point value comparer 12d that compares the load point value (accumulated load value) accumulated by the point value accumulator 12c with a reference value stored in the ROM in the controller 12. Further, an instructor 12e that issues an operation instruction to the inverter 11 in the brushless motor 1a on the basis of the comparison result is provided downstream of the point value comparer 12d.

The controller 12 performs the following high load detection process at predetermined intervals (for example, 10 ms intervals) when the brushless motor 1a is in operation. Here, first, the motor speed (the rotational speed of the rotor 13), the duty ratio, and a power supply voltage (the DC power supply voltage supplied to the inverter 11 from the external power supply 600) are detected. The motor speed is detected using the output signals (motor pulse signals) of the Hall sensors 15u, 15v and 15w. Here, the cycle of the motor pulse signal is used as the motor speed as it is. The current duty ratio of the brushless motor 1a that is being feedback-controlled on the basis of the motor pulse signal is acquired here as the duty ratio.

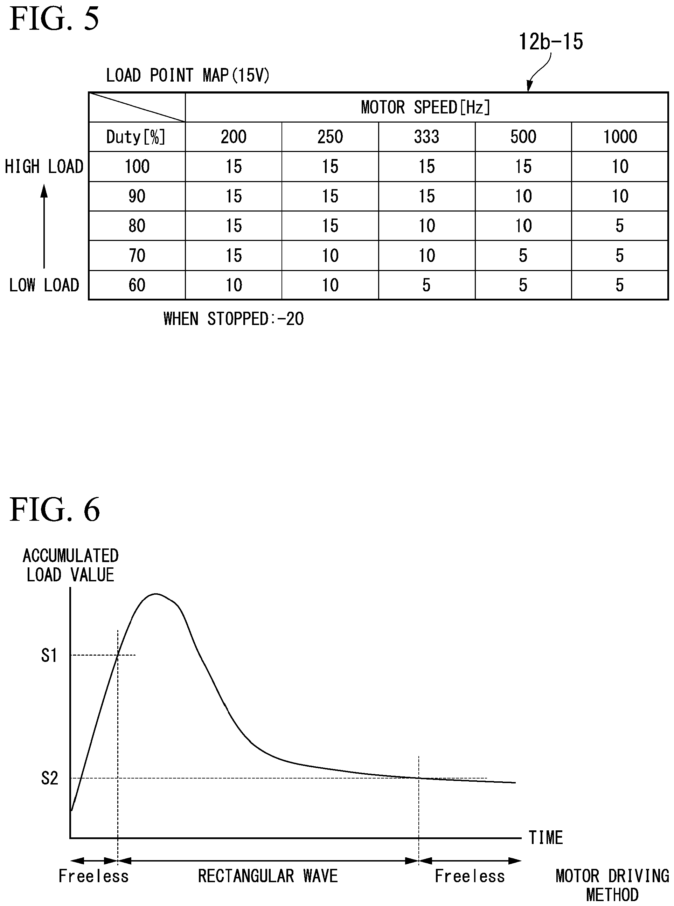

After acquiring the motor speed, the duty ratio, and the power supply voltage, the point value calculator 12a calculates a load point value by referring to the load point maps 12b. FIGS. 4 and 5 are explanatory diagrams showing configurations of the load point maps 12b. The load point maps 12b are formed using the motor speed (Hz) and the duty (duty ratio) (%) as parameters for each power supply voltage. FIG. 4 shows a load point map 12b when the power supply voltage is 12 V (a load point map 12b-12) and FIG. 5 shows a load point map 12b when the power supply voltage is 15 V (a load point map 12b-15). Each load point map 12b has point values set in accordance with the motor speed and the duty, where the point value is high when the duty is high due to a high load or when the rotational speed is decreasing.

For example, in the load point map 12b-12 of FIG. 4, the load point value is "+10" when the duty is 80% and the motor speed (motor pulse) is 250 Hz. With the same duty of 80%, the load is determined to be low and the load point value is "0" when the motor speed is 500 Hz, while the load is determined to be high and the load point value is "+15" when the motor speed is 200 Hz. With the same motor speed of 250 Hz, the load is determined to be normal and the load point value is "0" when the duty is 60%, while the load is determined to be high and the load point value is "+15" when the duty is 100%. On the contrary, with the duty of 80%, the load is determined to be low and the load point value is "-5" when the motor speed is 1000 Hz. When the motor is stopped, "-20" is set as the load point value.

On the other hand, when the power supply voltage becomes 15 V, the point distribution of the load point map 12b also changes and becomes like that of the load point map 12b-15. In this case, since the amount of current increases due to the increase of the power supply voltage, the load point value is "+15" under the same conditions (duty: 80% and motor speed: 250 Hz) as described above as shown in FIG. 5. On the contrary, the amount of current decreases when the power supply voltage is lowered. Therefore, a load point map 12b set such that the load point value is smaller under the same conditions to cope with the case where the power supply voltage is less than 12 V is prepared. Although such load point maps 12b at low voltages are not shown, those for 10 V, 11 V, and the like are prepared.

The point value calculator 12a accesses such a load point map 12b and acquires a load point value according to the current state of the brushless motor 1a while referring to the load point map 12b. After acquiring the load point value, the point value accumulator 12c accumulates the value into the load point value acquired so far. The aggregate point value thus accumulated is stored in the RAM in the controller 12 and is called from the point value accumulator 12c at the next processing.

If a high load state continues, the aggregate point value (accumulated load value) becomes a great positive value since a plus (positive) load point value continues when a high load state continues. On the other hand, if a normal load or a low load continues, a zero or minus (negative) load point value continues and thus becomes 0 or less. Here, when aggregate point values are 0 or less, they are all indicated as 0, and when the brushless motor 1a is operating normally, the aggregate point value indicates 0. When the load is temporarily high but thereafter decreases to a controllable area, the aggregate load point value is gradually reduced and eventually converges to 0 or a small positive value. Therefore, from the aggregate point value, it is possible to determine which state the brushless motor 1a is in at present, and it is possible to determine that the load is high when the aggregate point value is a certain value or more.

Therefore, when the aggregate point value is obtained, the point value comparer 12d in the controller 12 compares the obtained value with a threshold value for determining a high load state (a first predetermined threshold value). A point value at or above which the load is high is experimentally measured as the threshold value in advance and is stored in the ROM in the controller 12. For example, if it can be said that the load state is high when the aggregate point value has exceeded "100", "100" is set as the threshold value. When the aggregate point value has not exceeded the threshold value, it is determined that a high load state has not been reached. Meanwhile, when the aggregate point value exceeds the threshold value, an overload handling process such as switching of the operation mode is performed.

FIG. 6 is an explanatory view showing the relationship between the aggregate point value (accumulated load value), threshold values, and the operating state of the brushless motor 1a. In the brushless motor 1a, for example, when operation is performed with the current energization pattern being the first current energization pattern (freeless current energization pattern) and thus the load state becomes high, the aggregate point value increases, reaching a threshold value S1 (the first predetermined threshold value) as shown in FIG. 6. When the aggregate point value becomes equal to or higher than the threshold value S1 (equal to or higher than the first predetermined threshold value), the instructor 12e determines that the load state is high and switches the energization pattern of the brushless motor 1a from the first energization pattern to the second energization pattern (the rectangular wave energization pattern) as a high load handling process.

On the other hand, the reduction adjustment process of the aggregate point value is executed until the aggregate point value becomes equal to or less than a threshold value S2 (a second predetermined threshold value). The threshold value S2 is set to a value that does not significantly affect high load detection based on the aggregate point value even if control based on the freeless energization pattern starts from this value. That is, the threshold value S2 is set such that, when the brushless motor 1a is cooled to a certain extent and control based on the freeless energization pattern is performed, no significant difference occurs in the timing of high load detection after the control even if the control starts from the threshold value S2 or starts from an aggregate point value of 0.

That is, when the aggregate point value becomes less than the threshold value S2 (less than the second predetermined threshold value), the instructor 12e switches the energization pattern of the brushless motor 1a from the second energization pattern (the rectangular wave energization pattern) to the first energization pattern (the freeless energization pattern) as a high load handling process.

The high load detection method is performed through the process of switching the energization control at the timing when the accumulated load value determined according to the load on the rotor exceeds or does not exceed the threshold values S1 and S2 as described above. However, high load detection may also be performed through a method in which a shunt resistor is provided in a motor feed line and the load value is determined from a motor current value that flows through the grounded shunt resistor.

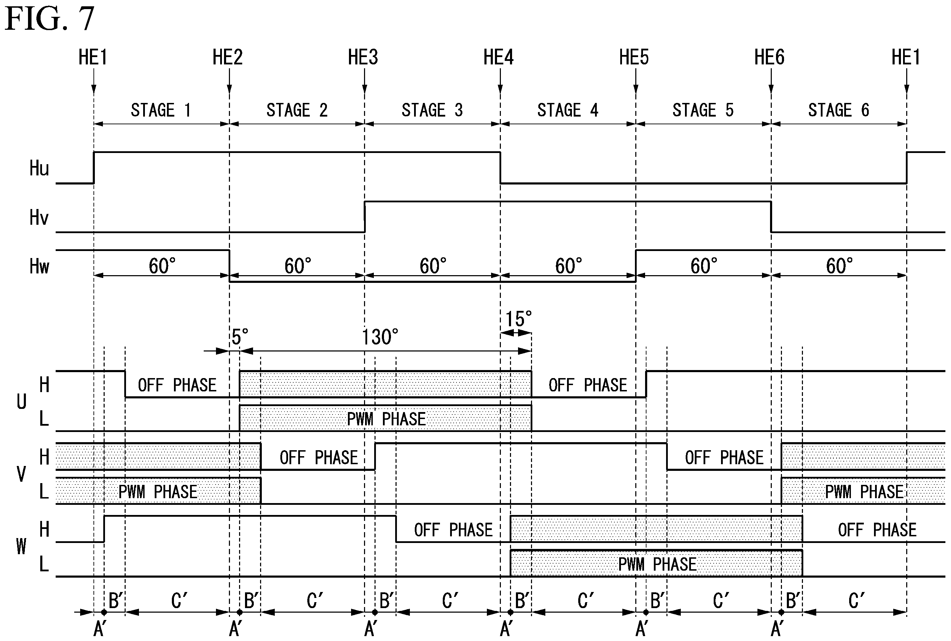

Next, examples of rectangular wave energization patterns, examples of freeless energization patterns according to the first embodiment, and examples of freeless energization patterns according to the second embodiment will be described with reference to FIGS. 7 to 12.

Here, FIGS. 7, 9 and 11 are explanatory diagrams illustrating examples of position detection signals Hu, Hv and Hw output from the Hall sensors 15u, 15v and 15w, and advanced and energization angles in energization control of the inverter circuit 6. FIGS. 7, 9 and 11 show the correspondence between the position detection signals Hu, Hv and Hw and angular regions in which the switching element VH is on. The horizontal axis represents the rotational position of the magnetic pole of the rotor of the brushless motor 1a by the electrical angle. The position detection signals Hu, Hv and Hw have a phase difference of 120° from each other with an electrical angle of 360° being one cycle, and change to an H or L level every 180°. In the present embodiment, the change of the position detection signal Hu from L to H is referred to as a Hall edge HE1 and the change from H to L is referred to as a Hall edge HE4. The change of the position detection signal Hv from L to H is referred to as a Hall edge HE3 and the change from H to L is referred to as a Hall edge HE6. The change of the position detection signal Hw from L to H is referred to as a Hall edge HE5 and the change from H to L is referred to as a Hall edge HE2. The electrical angle between respective Hall edges is 60°, assuming that the position detection signals Hu, Hv and Hw output from the Hall sensors 15u, 15v and 15w have no errors (the example shown in FIG. 3 is the case where the position detection signals Hu, Hv and Hw have no errors). In addition, the region between the Hall edge HE1 and the Hall edge HE2 is referred to as a Hall stage 1 (hereinafter, referred to simply as a stage 1 (the same applies hereinafter)), the region between the Hall edge HE2 and the Hall edge HE3 is referred to as a stage 2, and the region between the Hall edge HE3 and the Hall edges HE4 is referred to as a stage 3. Further, the region between the Hall edge HE4 and the Hall edge HE5 is referred to as a stage 4, the region between the Hall edge HE5 and the Hall edge HE6 is referred to as a stage 5, and the region between the Hall edge HE6 and the Hall edge HE1 is referred to as a stage 6.

FIG. 7 is a diagram illustrating examples of rectangular wave energization patterns. FIG. 7 shows the correspondence between the position detection signals Hu, Hv and Hw and the energization patterns of the switching elements UH, UL, VH, VL, WH and WL with the horizontal axis being the electrical angle. This example of energization control shown in FIG. 7 is the case where the advanced angle is 20° and the energization angle is 130°.

Each of the energization patterns of the switching elements UH, UL, VH, VL, WH and WL is (a) a state in which the switching element is continuously on ("ON"), (b) a state in which the switching element is continuously off (corresponding to a period other than "ON" or "PWM", which is also referred to as a free-phase period), or (c) a (PWM controlled) state in which the switching element is controlled such that the switching element is turned on or off in a fixed cycle ("PWM"). Each of the stages 1 to 6 is further divided into three sections A', B' and C'. An energization pattern is set individually for each of the sections A', B' and C'. The period (electrical angle) of each of the sections A', B' and C' changes according to the value of the advanced angle and the value of the energization angle.

For example, in the stage 1 defined between the Hall edge HE1 and the Hall edge HE2, the energization pattern of the section A' is a combination of states of the switching elements UH, UL, VH, VL, WH and WL being "ON," "OFF," "PWM," "PWM," "OFF" and "OFF," respectively. The energization pattern of the section B' is a combination of states of the switching elements UH, UL, VH, VL, WH and WL being "ON," "OFF," "PWM," "PWM," "ON" and "OFF," respectively. The energization pattern of the section C' is a combination of states of the switching elements UH, UL, VH, VL, WH and WL being "OFF," "OFF," "PWM," "PWM," "ON" and "OFF," respectively.

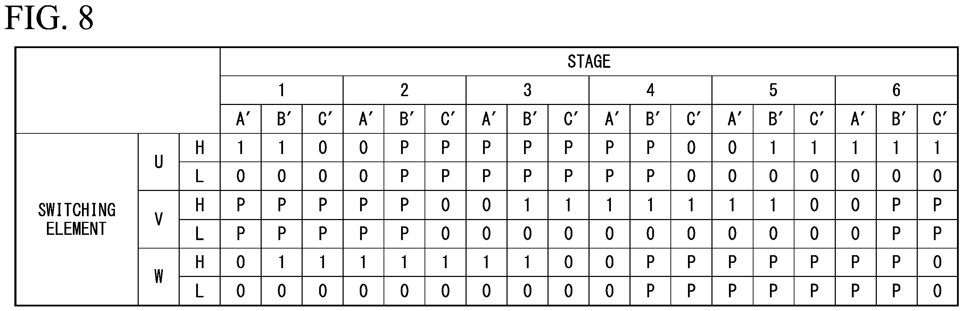

FIG. 8 is a table putting together the examples of rectangular wave energization patterns shown in FIG. 7. The ROM in the controller 12 stores, for example, rectangular wave energization patterns in a format as shown in FIG. 8. In FIG. 8, "1" represents on, "0" represents off, and "P" represents PWM.

As described above, the combinations defining the rectangular wave energization patterns have the following three states (1) to (3).
(1) First state: At least one of the switching elements UH, UL, VH, VL, WH and WL is continuously on ("ON").
(2) Second state: At least one of the switching elements UH, UL, VH, VL, WH and WL is continuously off (which corresponds to a period other than "ON" or "PWM").
(3) Third state: At least one of the switching elements UH, UL, VH, VL, WH and WL is controlled such that the at least one of the switching elements is turned on or off in a fixed cycle (PWM controlled) ("PWM").
   Here, there are two methods of controlling the driving/energization based on a freeless energization pattern. In a first method, the duty ratio of the PWM signal for the switching element connected to the coil of one of the three phases is set to an intermediate value between the duty ratios of the PWM signals for the switching elements connected to the coils of the other two phases. In a second method, the duty ratio of the PWM signal for the switching element connected to the coil of one of the three phases is set to one half of the instruction duty ratio that is input from the outside, and the duty ratios of PWM signals for the switching elements connected to the coils of the other two phases are set to the same value as the instruction duty ratio and to 100%, respectively.
   Hereinafter, as the first embodiment, the freeless energization pattern using the first method is described.
   In the driving/energization based on freeless energization patterns using the first method, the above states (1) to (3) are respectively changed to the following three states (4) to (6).
(4) Fourth state: The first state is changed to a fourth state (hereinafter referred to as a "PL" state) in which PWM control is performed by a PWM signal with a maximum duty ratio which is greater than that in the third state.
(5) Fifth state: The third state is changed to a fifth state (hereinafter referred to as a "PS" state) in which PWM control is performed by a PWM signal with a minimum duty ratio which is smaller than that in the third state.
(6) Sixth state: The second state is changed to a sixth state (hereinafter referred to as a "PM" state) in which PWM control is performed by a PWM signal of an intermediate duty ratio between the maximum duty ratio and the minimum duty ratio.

That is, the timings at which the coils of the U, V, and W phases each become PM state (the sixth state) in the freeless energizing pattern are respectively the same as the timings at which the coils of the U, V, and W phases each become the coil in OFF phase (the second state) in the rectangular wave energization pattern.

Thus, it is possible to address the problem that the control circuit (controller 12) for driving the switching elements malfunctions if a negative voltage is generated at an input terminal of the brushless motor when the energization pattern switches from the first state to the second state. In addition, even during the time of the 120° rectangular wave energization being free (in an open phase period, i.e., a period in which they are in the second state), PWM control is performed as in the sixth state, resulting in 180° energization, thus smoothing current waveforms at the time of commutation, such that it becomes possible to expect an effect of quieting driving noise (reducing motor operation noise).

Here, in the present embodiment, the intermediate duty ratio is 50%. The maximum duty ratio is a duty ratio obtained by adding one half of an instruction duty ratio input from the outside to the intermediate duty ratio. The minimum duty ratio is a duty ratio obtained by subtracting one half of the instruction duty ratio from the intermediate duty ratio. For example, if the instruction duty ratio is 80%, the intermediate duty ratio is preset to 50%, so that the maximum duty ratio is 90% due to 50+80/2 and the minimum duty ratio is 10% due to 50-80/2. The instruction duty ratio may be stored in advance in the ROM of the controller 12 by the user.

Here, PWM signals which are in reverse phase to PWM signals input to the switching elements UH, VH and WH on the positive electrode side are input to the switching elements UL, VL and WL on the negative electrode side. Therefore, the duty ratios of PWM signals for driving a pair of switching elements on the positive electrode side and the negative electrode side differ from each other. However, in the present embodiment, the duty ratios of PWM signals for driving the switching elements on the positive electrode side are referred to as the duty ratios of PWM signals for driving the pairs of switching elements.

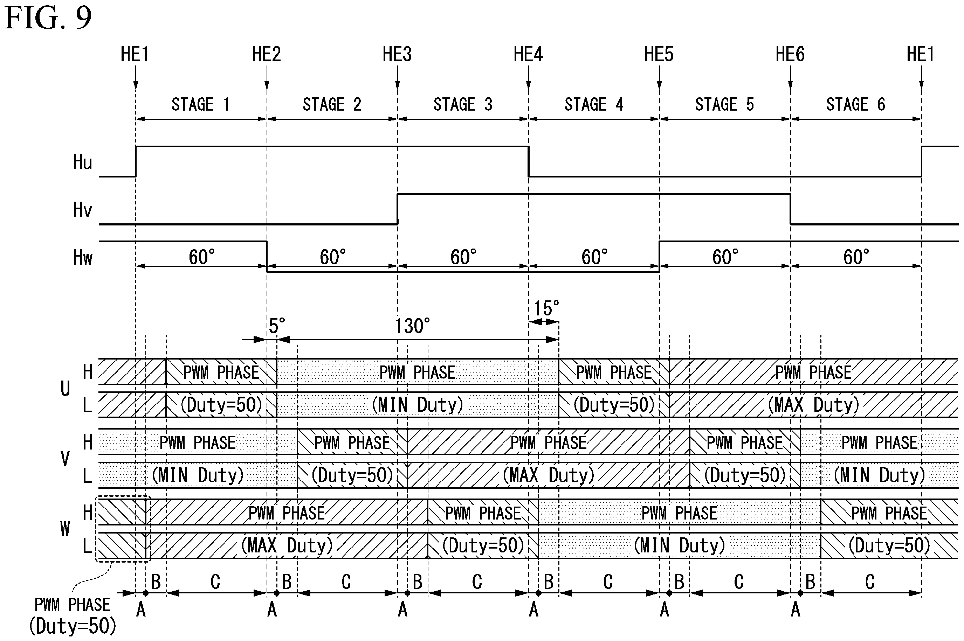

FIG. 9 is a diagram illustrating examples of freeless energization patterns according to the first embodiment. FIG. 9 shows the correspondence between the position detection signals Hu, Hv and Hw and the energization patterns of the switching elements UH, UL, VH, VL, WH and WL with the horizontal axis being the electrical angle. This example of energization control shown in FIG. 9 is the case where the advanced angle is 20° and the energization angle is 130°.

Each of the energization patterns of the switching elements UH, UL, VH, VL, WH and WL is (a) the "PL" state (fourth state) to which the continuously on state ("ON"), i.e., the "ON" state (first state), has been changed, (b) the "PM" state (sixth state) to which the continuously off state ("OFF") (corresponding to a period other than "ON" or "PWM"), i.e., the "OFF" state (second state), has been changed, or (c) the "PS" state (fifth state) to which the ("PWM") state in which the switching element is controlled such that the switching element is turned on or off in a fixed cycle (PWM controlled), i.e., the "PWM" state (third state), has been changed. Each of the stages 1 to 6 is further divided into three sections A, B and C. An energization pattern is set individually for each of the sections A, B and C. The period (electrical angle) of each of the sections A, B and C changes according to the value of the advanced angle and the value of the energization angle.

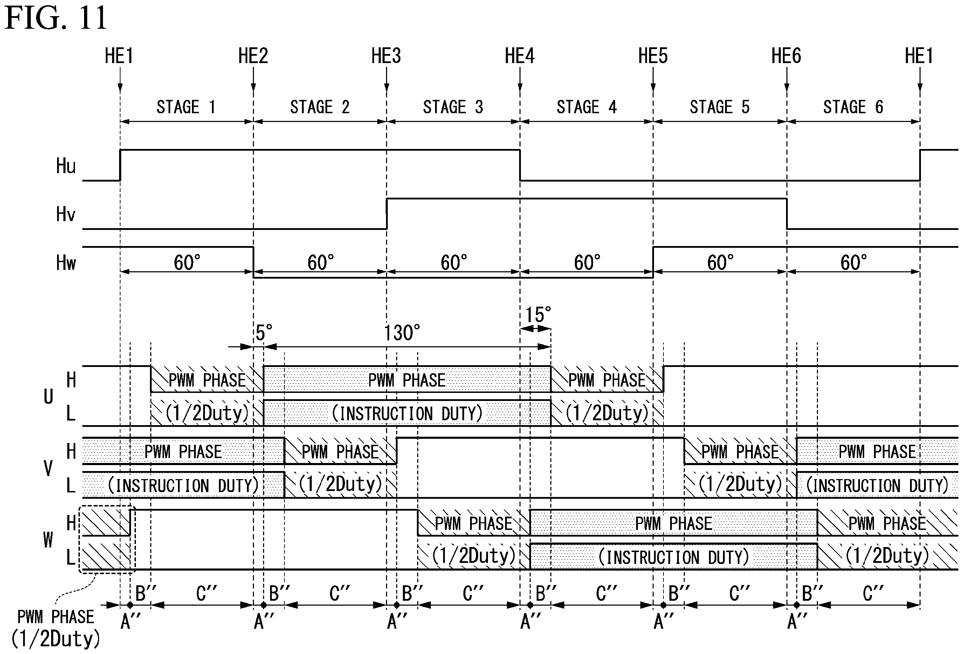

In addition, since the switching elements UH, UL, VH, VL, WH and WL each repeats ON and OFF in the PWM controlled state, the waveform is exactly a rectangular waveform having projections and indentations. However, in Fig. 9 and Fig. 11, which will be described later, the ON/OFF of the switching elements UH, UL, VH, VL, WH and WL are each not specified, and each are referred to as "PWM phase" for convenience. Here, in Fig. 9, the "PL" state is referred to as "PWM phase (MAX Duty)", "PS" state as "PWM phase (MIN Duty)" and "PM" state as "PWM phase (Duty = 50)".

For example, in the stage 1 defined between the Hall edge HE1 and the Hall edge HE2, the energization pattern of the section A is a combination of states of the switching elements UH, UL, VH, VL, WH and WL being "PL," "PL," "PS," "PS," "PM" and "PM," respectively. The energization pattern of the section B is a combination of states of the switching elements UH, UL, VH, VL, WH and WL being "PL," "PL," "PS," "PS," "PL" and "PL," respectively. The energization pattern of the section C is a combination of states of the switching elements UH, UL, VH, VL, WH and WL being "PM," "PM," "PS," "PS," "PL" and "PL," respectively.

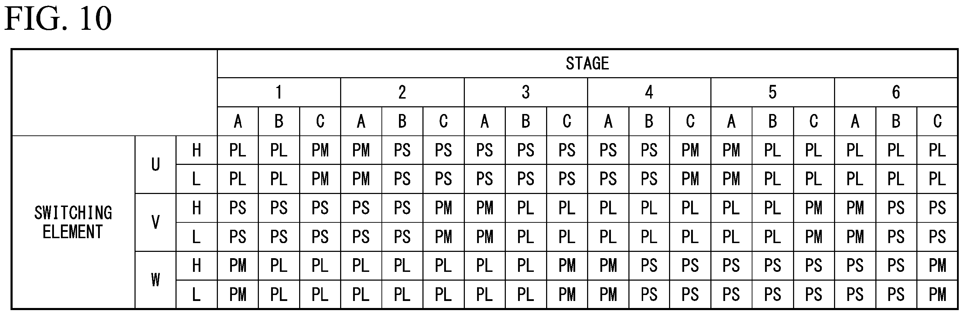

FIG. 10 is a table putting together the examples of freeless energization patterns shown in FIG. 9. The ROM in the controller 12 stores, for example, freeless energization patterns in a format as shown in FIG. 10. In FIG. 10, "PL" represents the fourth state in which PWM control is performed by a PWM signal of the maximum duty ratio, "PS" represents the fifth state in which PWM control is performed by a PWM signal of the minimum duty ratio, and "PM" represents the sixth state in which PWM control is performed by a PWM signal of the intermediate duty ratio between the maximum duty ratio and the minimum duty ratio.

Hereinafter, as the second embodiment, the freeless energization pattern using the second method is described.

In the driving/energization based on freeless energization patterns using the second method, the above states (1) to (3) are respectively changed to the following three states (7) to (9). The actual state does not change between the state (1) and the state (7) since the control for the switching elements are the same.
(7) Seventh state: The first state is maintained and at least one of the switching elements UH, UL, VH, VL, WH and WL is continuously on ("ON").
(8) Eighth state: The third state is changed to an eighth state (hereinafter referred to as a "P1" state) in which PWM control is performed by a PWM signal of the instruction duty ratio input from the outside.
(9) Ninth state: The second state is changed to a ninth state (hereinafter referred to as a "P2" state) in which PWM control is performed by a PWM signal with a duty ratio that is one half of the instruction duty ratio input from the outside.

That is, the timings at which the coils of the U, V, and W phases each become P2 state (the ninth state) in the free-less energizing pattern are respectively the same as the timings at which the coils of the U, V, and W phases each become the coil in OFF phase (the second state) in the rectangular wave energization pattern.

Thus, it is possible to address the problem that the control circuit (controller 12) for driving the switching elements malfunctions if a negative voltage is generated at an input terminal of the brushless motor when the energization pattern switches from the first state to the second state. In addition, even during the time of the 120° rectangular wave energization being free (in an open phase period, i.e., a period in which they are in the second state), PWM control is performed as in the ninth state, resulting in 180° energization, thus smoothing current waveforms at the time of commutation, such that it becomes possible to expect an effect of quieting driving noise (reducing motor operation noise).

That is, the same effect can be expected using the driving/energization method according to the freeless energization pattern of either the first embodiment or the second embodiment.

Here, in the present embodiment, the duty ratio in the seventh state is 100%. For example, if the instruction duty ratio is 80%, the duty ratio in the eighth state is 80%, and the duty ratio in the ninth state is 40% due to 80/2. The instruction duty ratio may be stored in advance in the ROM of the controller 12 by the user.

FIG. 11 is a diagram illustrating examples of freeless energization patterns according to the second embodiment. FIG. 11 shows the correspondence between the position detection signals Hu, Hv and Hw and the energization patterns of the switching elements UH, UL, VH, VL, WH and WL with the horizontal axis being the electrical angle. This example of energization control shown in FIG. 11 is the case where the advanced angle is 20° and the energization angle is 130°. Each of the energization patterns of the switching elements UH, UL, VH, VL, WH and WL is (a) the state (seventh state) in which the continuously on state ("ON"), i.e., the "ON" state (first state) is maintained, (b) the "P2" state (ninth state) to which the continuously off state ("OFF") (corresponding to a period other than "ON" or "PWM"), i.e., the "OFF" state (second state), has been changed, or (c) the "P1" state (eighth state) to which the ("PWM") state in which the switching element is controlled such that the switching element is turned on or off in a fixed cycle (PWM controlled), i.e., the "PWM" state (third state), has been changed. Each of the stages 1 to 6 is further divided into three sections A', B' and C'. An energization pattern is set individually for each of the sections A', B' and C'. The period (electrical angle) of each of the sections A', B' and C' changes according to the value of the advanced angle and the value of the energization angle. Here, in Fig. 11, the "P1" state is referred to as "PWM phase (instruction Duty)" and the "P2" state is referred to as "PWM phase (1/2 Duty)".

For example, in the stage 1 defined between the Hall edge HE1 and the Hall edge HE2, the energization pattern of the section A' is a combination of states of the switching elements UH, UL, VH, VL, WH and WL being "1," "0," "P1," "P1," "P2" and "P2," respectively. The energization pattern of the section B' is a combination of states of the switching elements UH, UL, VH, VL, WH and WL being "1," "0," "P1," "P1," "1" and "0," respectively. The energization pattern of the section C' is a combination of states of the switching elements UH, UL, VH, VL, WH and WL being "P2," "P2," "P1," "P1," "1" and "0," respectively.

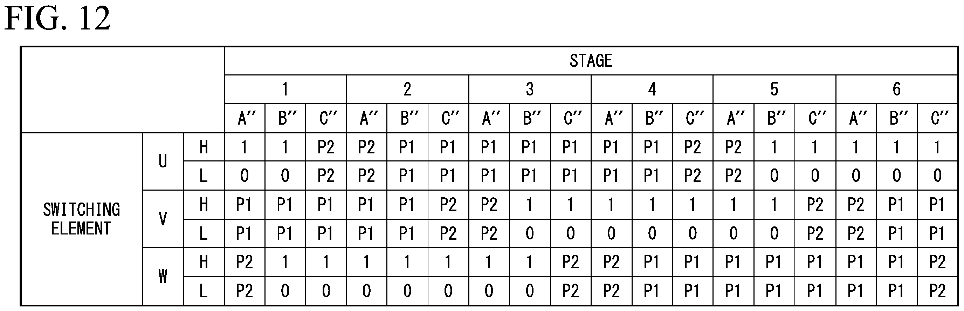

FIG. 12 is a table putting together the examples of freeless energization patterns shown in FIG. 11. The ROM in the controller 12 stores, for example, freeless energization patterns in a format as shown in FIG. 12. In FIG. 12, "P1" represents the eighth state in which PWM control is performed by a PWM signal of the instruction duty ratio input from the outside, "P2" represents the ninth state in which PWM control is performed by a PWM signal of a duty ratio that is one half of the instruction duty ratio, "1" represents ON, and "0 represents OFF".

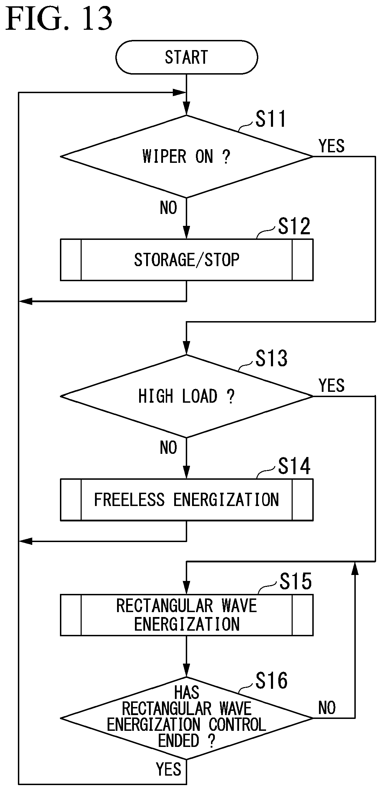

Next, an operation of switching between rectangular wave energization control and freeless energization control by the controller 12 will be described with reference to FIG. 13. FIG. 13 is a flowchart showing an example of the energization control switching operation of the controller 12. After the operation starts, the controller 12 repeatedly executes the process shown in FIG. 13, for example, at predetermined time intervals. The controller 12 always selects freeless energization control at the start of the operation.

The controller 12 determines whether or not the wipers are on (step S11).

Specifically, the controller 12 determines whether or not switch information of wiper switch ON has been input to the brushless motor 1a.

When the wipers are not on (No in step S11), a storage/stop process is performed (step S12).

Specifically, the controller 12 stores the wiper arms 3a and 3b in storage positions provided below the lower reversing positions of the wiping ranges 5a and 5b and stops the brushless motor 1a.

On the other hand, when the wipers are on (Yes in step S11), the controller 12 determines whether or not the load on the rotor 13 is high (step S13).

Specifically, the point value comparer 12d in the controller 12 determines whether or not the aggregate point value (accumulated load value) is equal to or greater than the threshold value S1 (the first predetermined threshold value). When the aggregate point value is calculated here, a temporal average value, over the periods of the stages 1 to 6, of the three duty ratios in the fourth state ("PL" state), the fifth state ("PS" state), and the sixth state ("PM") in the freeless energization pattern according to the first embodiment is used as the duty ratio. However, for example, the duty ratio in the sixth state ("PM" state) of the freeless energization pattern may be used.

In the freeless energization pattern of the second embodiment, the aggregate point value may be calculated by using a temporal average value of the three duty ratios in stages 1 to 6 of the seventh state, the eighth state (the "P1" state) and the ninth state (the "P2" state) and/or by using the duty ratio of the ninth state (the "P2" state).

When the aggregate point value is less than the threshold value S1 (less than the first predetermined threshold value) (No in step S13), the controller 12 continues the freeless energization control (step S14). Specifically, the instructor 12e in the controller 12 continues to apply the freeless energization pattern which is the current energization pattern switched to (step S14).

On the other hand, when the aggregate point value is equal to or greater than the threshold value S1 (equal to or greater than the first predetermined threshold value) (Yes in step S13), the controller 12 performs the rectangular wave energization control. Specifically, the instructor 12e in the controller 12 switches the energization pattern to the rectangular wave energization pattern (step S15).

Here, the timing of changing the energization pattern (switching timing) is when the wiper arms 3a and 3b are located in the (lower or upper) reversing positions of the wiping ranges 5a and 5b since switching during wiping may cause abnormal behavior in the wiper arms 3a and 3b.

Subsequently, the controller 12 determines whether or not the rectangular wave energization control has ended (step S16).

Specifically, the point value comparer 12d in the controller 12 determines whether or not the aggregate point value (accumulated load value) is less than the threshold value S2 (the second predetermined threshold value smaller than the first threshold value). When the aggregate point value is calculated here, a temporal average value, over the periods of the stages 1 to 6, of the three duty ratios in the first state ("ON" state in which the duty ratio is 100%), the second state ("OFF" state in which the duty ratio is 0%), and the third state ("PWM state" in which the duty ratio is 0 to 100%) of the rectangular wave energization pattern is used as the duty ratio. However, for example, the duty ratio in the third state ("PWM" state) of the rectangular wave energization pattern may be used.

With the same load on the rotor 13, the temporal average value of the duty ratios or the duty ratio in the third state ("PWM" state) of the rectangular wave energization pattern is smaller than the temporal average value of the duty ratios or the duty ratio in the sixth state ("PM" state) of the freeless energization pattern, and thus the rectangular wave energization improves motor properties over the freeless energization.

When the aggregate point value is equal to or greater than the threshold value S2 (No in step S16), the controller 12 returns to step S15 and continues the rectangular wave energization control. On the other hand, when the aggregate point value is less than the threshold value S2 (less than the second predetermined threshold value) (Yes in step S16), the controller 12 returns to step S11 and determines whether or not switch information of wiper switch ON has been input.

When the determination result of step S11 is No, the controller 12 performs the process of step S12 (storage/stop process) described above.

On the other hand, when the determination result of step S11 is Yes, the aggregate point value is less than the threshold value S1 (less than the first predetermined threshold value), and thus the controller 12 performs the process of step S14 (freeless energization control) due to the negative result of step S13 (No in step S13).

That is, the timing of terminating the rectangular wave energization control is when the load on the rotor 13 is low and thus the freeless energization control is performed thereafter or the wiping ends.

As described above, according to the embodiment of the present invention, when the load on the rotor 13 is high, motor properties are improved by switching the freeless energization control to the rectangular wave energization control, such that it is possible to continue wiping without losing the load. On the other hand, when the load on the rotor 13 is low, the rectangular wave energization control in which motor operation noise during the wiping operation is great can be switched to the freeless energization control, thereby reducing motor operation noise.

That is, according to the embodiment of the present invention, it is possible to appropriately switch between the freeless energization control and the rectangular wave energization control according to the accumulated load value determined according to the load on the rotor.

Further, in Step S16, the threshold value S2 of the aggregate point value when switching from the rectangular wave energization control to the freeless energization control is set to a value smaller than the threshold value S1, so that even when the load fluctuates significantly, the frequency of switching of the energization pattern is reduced and the discomfort which is caused to the occupant can be mitigated.

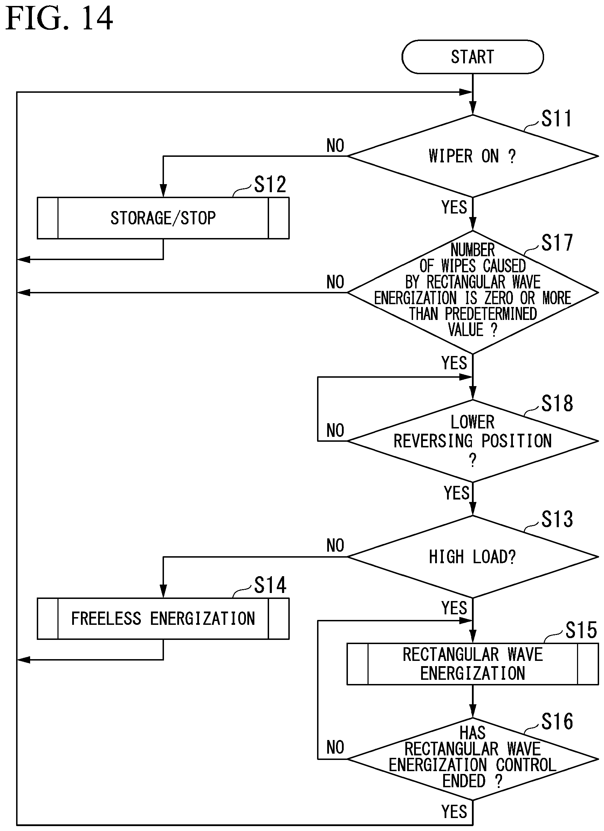

FIG. 14 is a flowchart illustrating another example of an energization control switching operation by the controller 12. The same steps as in the embodiment of Fig. 13 will be given with the same reference numerals and the description will be omitted. The present embodiment differs from the flow chart shown in FIG. 13 in that there are steps S17 and S18 before step S13. The controller 12, as in the embodiment of Fig. 13, always selects the freeless energization control at the start of operation.

Here, the controller 12 detects the rotation speed of the brushless motors 1a and 1b based on the output signals of the Hall sensors 15u, 15v and 15w provided in the brushless motors 1a and 1b. The controller 12 detects the rotation angle of the brushless motors 1a and 1b based on the output signal of an absolute angle sensor (not shown) provided in the brushless motors 1a and 1b. There is a correlation between the rotation speed of the brushless motors 1a and 1b and the rotation speed of the wiper blades 4a and 4b based on the reduction ratio and the link operation ratio, and the rotation position and the wiping frequency of the wiper blades 4a and 4b can be calculated based on the rotation speed (rotation frequency) of the brushless motors 1a and 1b.

As illustrated in FIG. 14, when the wiper is ON (Step S11-Yes), the controller 12 determines whether or not the wiping frequency due to the rectangular wave energization pattern is 0 times or more than a predetermined value (Step S17). Here, the number of wipes caused by the rectangular wave energization starts counting after switching from freeless energization to rectangular wave energization, and the count is reset when switching from rectangular wave energization to freeless energization. A predetermined value of the number of wipes by rectangular wave energization is set 10, for example.

If the number of wipes by the rectangular wave energization pattern is not zero and it is not more than a predetermined value (Step S17-No), it returns to Step S11 and continues the current energization pattern.

When the number of times of wiping by the rectangular wave energization pattern is zero or more than a predetermined value (Step S17-Yes), the controller 12 determines whether or not the wiper blades 4a and 4b are in the lower reversing position (step S18).

If the wiper blades 4a and 4b are not in the lower reversing position (step S18-No), the current energization pattern is continued until the wiper blades 4a and 4b reach the lower reversing position.

If the wiper blades 4a and 4b are in the lower reversing position (Step S18-Yes), it changes to Step S13. When the aggregate point value is equal to or greater than the threshold value S1 (equal to or greater than the first predetermined threshold value) (Yes in step S13), the controller 12 performs the rectangular wave energization control (Step 15) so that it changes to step S16.

In the above-described embodiment, the same effect as the embodiment shown in Fig. 13 can be obtained. Further, in step S18, the additional condition is such that the switching between freeless energization and rectangular wave energization is performed when the wiper blades 4a and 4b are in the lower reversing position, thereby making it difficult for the occupant to notice the change in the wiping rhythm due to the switching of the energization pattern. In the above-described embodiments, the condition of the position of the wiper blades 4a and 4b in step S18 is described as the lower reversing position, but the same effect can be obtained even in the upper reversing position. In addition, when switching from the rectangular wave energization to the freeless energization, in step S17, the condition of the number of wipes by the rectangular wave energization pattern is applied, so that even when the load fluctuates significantly, the frequency of switching of the energization pattern is reduced and the discomfort which is caused to the occupant can be mitigated.

Embodiments of the present invention are not limited to the above. For example, the rotor 13, the stator 14, the inverter 11 and the controller 12 are configured integrally in the above embodiment. However, for example, the controller 12 may be configured separately from the other components or the controller 12 and the inverter 11 may be configured separately from the other components. In the above embodiment, the wiper device 10 is provided with two motor devices 100a and 100b. However, the present invention is not limited to this configuration. For example, the present invention may be configured such that one motor device swings the wiper arms 3a and 3b via a link mechanism. Moreover, although the brushless motors 1a and 1b are components of the wiper device 10 in the above embodiment, the application field thereof is not limited to wiper devices.

### EXPLANATION OF REFERENCES

1a, 1b Brushless motors
10 Wiper device
100a, 100b Motor devices
11 Inverter
UH, UL, VH, VL, WH, WL Switching elements
12 Controller
12a Point value calculator
12b Load point map
12c Point value accumulator
12d Point value comparer
12e Instructor
13 Rotor
14 Stator
14u, 14v, 14w Windings
15u, 15v, 15w Hall sensors

## Claims

1. A brushless motor comprising:
a stator (14) including three-phase windings (14u, 14v, 14w);
a rotor (13) including a permanent magnet, the rotor (13) being configured to rotate in a state facing the stator (14);
Hall sensors (15u, 15v, 15w) configured to detect a rotation positon of the rotor (13);
an inverter (11) including a plurality of switching elements, the inverter (11) being configured to conduct an alternating current to the three-phase windings (14u, 14v, 14w) by turning on or off the plurality of switching elements; and
a controller (12) configured to control on or off states of the plurality of switching elements by switching an energization pattern, which represents changes in energization states of phases of the three-phase windings (14u, 14v, 14w) according to rotation of the rotor (13), to a freeless energization pattern or a rectangular wave energization pattern,
wherein the controller (12) is configured to switch the energization pattern to the freeless energization pattern when an accumulated load value is less than a first predetermined threshold value and switch the energization pattern to the rectangular wave energization pattern when the accumulated load value is equal to or greater than the first predetermined threshold value,
wherein the accumulated load value is calculated by accumulating a load value related to a rotational speed of the rotor (13),
wherein the rectangular wave energization pattern includes an energization pattern that is a combination of a first state that is a state in which at least one of the switching elements is continuously on, a second state that is a state in which at least another one of the switching elements is continuously off, and a third state that is a state in which at least still another one of the switching elements is PWM controlled, and
the brushless motor **characterized in that**
the freeless energization pattern includes an energization pattern that is a combination of a seventh state that is a state in which at least one of the switching elements is continuously on, an eighth state that is a state in which at least another one of the switching elements is PWM controlled by a PWM signal of an instruction duty ratio that is input from the outside, and a ninth state that is a state in which at least still another one of the switching elements is PWM controlled by a PWM signal of a duty ratio that is one half of the instruction duty ratio.

2. The brushless motor according to claim 1, wherein the controller (12) is configured to switch the energization pattern to the freeless energization pattern when the accumulated load value becomes less than a second predetermined threshold value that is smaller than the first predetermined threshold value after the accumulated load value has become equal to or greater than the first predetermined threshold value.

3. The brushless motor according to any one of claims 1 or 2, wherein the accumulated load value is obtained by detecting, at predetermined intervals, a power supply voltage supplied to the inverter (11), a rotational speed of the rotor (13), and a duty ratio of a PWM signal in a PWM controlled state among energization states included in the freeless energization pattern or the rectangular wave energization pattern and by accumulating a load point value calculated on the basis of the detected power supply voltage, the rotational speed and the duty ratio.

4. A method for controlling a brushless motor,
the brushless motor including:
a stator (14) including three-phase windings (14u, 14v, 14w);
a rotor (13) including a permanent magnet, the rotor (13) being configured to rotate in a state facing the stator (14);
Hall sensors (15u, 15v, 15w) configured to detect a rotation positon of the rotor (13);
an inverter (11) including a plurality of switching elements, the inverter (11) being configured to conduct an alternating current to the three-phase windings (14u, 14v, 14w) by turning on or off the plurality of switching elements; and
a controller (12) configured to control on or off states of the plurality of switching elements by switching an energization pattern, which represents changes in energization states of phases of the three-phase windings (14u, 14v, 14w) according to rotation of the rotor (13), to a freeless energization pattern or a rectangular wave energization pattern,
the method comprising:
the controller (12) switching the energization pattern to the freeless energization pattern when an accumulated load value is less than a first predetermined threshold value; and
switching the energization pattern to the rectangular wave energization pattern when the accumulated load value is equal to or greater than the first predetermined threshold value,
calculating the accumulated load value by accumulating a load value calculated based on a rotational speed of the rotor (13),
wherein the rectangular wave energization pattern includes an energization pattern that is a combination of a first state that is a state in which at least one of the switching elements is continuously on, a second state that is a state in which at least another one of the switching elements is continuously off, and a third state that is a state in which at least still another one of the switching elements is PWM controlled, and
the method **characterized in that**
the freeless energization pattern includes an energization pattern that is a combination of a seventh state that is a state in which at least one of the switching elements is continuously on, an eighth state that is a state in which at least another one of the switching elements is PWM controlled by a PWM signal of an instruction duty ratio that is input from the outside, and a ninth state that is a state in which at least still another one of the switching elements is PWM controlled by a PWM signal of a duty ratio that is one half of the instruction duty ratio.

5. The method according to claim 4, wherein the brushless motor is included in a wiper device that further comprises:
a wiper arm that is swingably moved by the brushless motor; and
a wiper blade connected to the wiper arm to reciprocally wipe a wiping area of a vehicle,
wherein
the energization pattern is switched when a position of the wiper blade is at a reversing position in the wiping area.

6. The method according to claim 5,
wherein the controller (12) counts the number of wipes of the wiper blades in the rectangular wave energization pattern, and switches from the rectangular wave energization pattern to the freeless energizing pattern when the number of wipes is equal to or greater than a predetermined value.

## Patentansprüche

1. Ein bürstenloser Motor, der enthält:
einen Stator (14), mit Drei- Phasen- Wicklungen (14u, 14v, 14w);
einen Rotor (13), einschließlich einem Dauermagneten, der Rotor (13) ist dazu konfiguriert sich in einen Zustand zu drehen, in dem er sich gegenüber dem Stator (14) befindet;
Hall- Sensoren (15u, 15v, 15w), konfiguriert zur Erkennung einer Drehposition des Rotors (13);
einen Umrichter (11) einschließlich einer Vielzahl von Schaltelementen, der Umrichter (11) ist dazu konfiguriert, einen Wechelstrom zu den Drei- Phasen-Wicklungen (14u, 14v, 14w) zu leiten, indem die Vielzahl von Schaltelementen ein- und ausgeschaltet werden; und
ein Steuergerät (12), konfiguriert um die Ein- oder Aus- Zustände der Vielzahl von Schaltelementen zu steuern, indem ein Energieversorgungsmuster geschaltet wird, das Veränderungen in den Energieversorgungzuständen der Phasen der DreiPhasen- Wicklungen (14u, 14v, 14w) entsprechend der Drehung des Rotors (13) darstellt, zu einem lastlosen Energieversorgungsmuster oder einem Rechteckwellen-Energieversorgungsmuster,
wobei das Steuergerät (12) dazu konfiguriert ist, das Energieversorgungsmuster in das lastlose Energieversorgungsmuster zu schalten, wenn ein akkumulierter Lastwert unter einem ersten vorher festgelegten Schwellenwert liegt und das Energieversorgungsmuster in das Rechteckwellen- Energieversorgungsmuster zu schalten, wenn der akkumulierte Lastwert gleich dem oder größer als der erste vorher festgelegte Schwellenwert ist,
wobei
der akkumulierte Lastwert berechnet wird durch Akkumulieren eines Lastwertes in Beziehung auf die Drehgeschwindigkeit des Rotors (13),
wobei
das Rechteckwellen- Energieversorgungsmuster ein Energieversorgungsmuster beinhaltet, bei dem es sich um eine Kombination aus einem ersten Zustand, und zwar einem Zustand, in dem mindestens eines der Schaltelemente kontinuierlich eingeschaltet ist, einem zweiten Zustand, und zwar einem Zustand, in dem mindestens ein weiteres der Schaltelemente kontinuierlich ausgeschaltet ist, und einem dritten Zustand, und zwar einem Zustand, in dem mindestens noch ein weiteres der Schaltelemente PWM- gesteuert ist, handelt und
der bürstenlose Motor ist **dadurch gekennzeichnet, dass**,
das lastfreie Energieversorgungsmuster ein Energieversorgungsmuster beinhaltet, bei dem es sich um eine Kombination aus einem siebten Zustand, und zwar einem Zustand, in dem mindestens eins der Schaltelemente kontinuierlich eingeschaltet ist, einem achten Zustand, und zwar einem Zustand, in dem mindestens noch ein weiteres der Schaltelemente über ein PWM- Signal PWM- gesteuert ist, mit einem Anweisungs- Tastverhältnis, das von außen eingegeben wird und einem neunten Zustand, bei dem es sich um einen Zustand handelt, in dem mindestens noch ein weiteres der Schaltelemente über ein PWM- Signal PWM- gesteuert ist, mit einem Tastverhältnis, das die Hälfte des Anweisungs- Tastverhältnisses beträgt, handelt.

2. Bürstenloser Motor nach Anspruch 1, wobei das Steuergerät (12) dazu konfiguriert ist, das Energieversorgungsmuster in das lastlose Energieversorgungsmuster zu schalten, wenn der akkumulierte Lastwert kleiner wird als ein zweiter vorher eingestellter Schwellenwert, der kleiner ist, als der erste vorher eingestellte Schwellenwert, nachdem der akkumulierte Lastwert gleich dem oder größer als der erste vorher eingestellte Schwellenwert wurde.

3. Bürstenloser Motor nach irgendeinem der Ansprüche 1 bis 2, wobei der akkumulierte Lastwert sich ergibt, durch Erkennung an vorher festgelegten Intervallen, einer Versorgungsspannung, die in den Umrichter (11) eingespeist wird, einer Drehgeschwindigkeit des Rotors (13) und einem Tastverhältnis eines PWM-Signals in einem PWM- gesteuerten Zustand unter Energieversorgungszuständen, die im lastlosen Energieversorgungsmuster oder dem Rechteckwellen-Energieversorgungsmuster enthalten sind und durch Akkumulieren eines Lastpunktwertes, berechnet auf Basis der festgestellten Versorgungsspannung, der Drehgeschwindigkeit und dem Tastverhältnis .

4. Verfahren zur Steuerung eines bürstenlosen Motors,
der bürstenlose Motor enthält dabei:
einen Stator (14), mit Drei- Phasen- Wicklungen (14u, 14v, 14w);
einen Rotor (13) einschließlich einem Dauermagneten, der Rotor (13) ist dabei dazu konfiguriert, sich in einen Zustand zu drehen, in dem er sich gegenüber dem Stator (14) befindet;
Hall- Sensoren (15u, 15v, 15w), konfiguriert zur Erkennung einer Drehposition des Rotors (13);
einen Umrichter (11) einschließlich einer Vielzahl von Schaltelementen, der Umrichter (11) ist dazu konfiguriert, einen Wechelstrom zu den Drei- Phasen-Wicklungen (14u, 14v, 14w) zu leiten, indem die Vielzahl von Schaltelementen ein- und ausgeschaltet werden; und
ein Steuergerät (12), konfiguriert um die Ein- oder Aus- Zustände der Vielzahl von Schaltelementen zu steuern, indem ein Energieversorgungsmuster geschaltet wird, das Veränderungen in den Energieversorgungzuständen der Phasen der DreiPhasen- Wicklungen (14u, 14v, 14w) entsprechend der Drehung des Rotors (13) darstellt, zu einem lastlosen Energieversorgungsmuster oder einem Rechteckwellen-Energieversorgungsmuster,
wobei das Verfahren umfasst:
das Steuergerät (12), das das Energieversorgungsmuster in das lastlose Energieversorgungsmuster schaltet, wenn der akkumulierte Lastwert niedriger ist als ein erster vorher festgelegter Schwellenwert; und
das Energieversorgungsmuster in das Rechteckwellen- Energieversorgungsmuster zu schalten, wenn der akkumulierte Lastwert gleich dem oder größer als der erste vorher festgelegte Schwellenwert ist.
Berechnung des akkumulierten Lastwertes durch Akkumulieren eines Lastwertes in Beziehung zur Drehgeschwindigkeit des Rotors (13),
wobei
das Rechteckwellen- Energieversorgungsmuster ein Energieversorgungsmuster beinhaltet, bei dem es sich um eine Kombination aus einem ersten Zustand, und zwar einem Zustand, in dem mindestens eines der Schaltelemente kontinuierlich eingeschaltet ist, einem zweiten Zustand, und zwar einem Zustand, in dem mindestens ein weiteres der Schaltelemente kontinuierlich ausgeschaltet ist, und einem dritten Zustand, und zwar einem Zustand, in dem mindestens noch ein weiteres der Schaltelemente PWM- gesteuert ist, handelt; und
das Verfahren ist **dadurch gekennzeichnet, dass**
das lastfreie Energieversorgungsmuster ein Energieversorgungsmuster beinhaltet, bei dem es sich um eine Kombination aus einem siebten Zustand, und zwar einem Zustand, in dem mindestens eins der Schaltelemente kontinuierlich eingeschaltet ist, einem achten Zustand, und zwar einem Zustand, in dem mindestens noch ein weiteres der Schaltelemente über ein PWM- Signal PWM- gesteuert ist, mit einem Anweisungs- Tastverhältnis, das von außen eingegeben wird. und einem neunten Zustand, bei dem es sich um einen Zustand handelt, in dem mindestens noch ein weiteres der Schaltelemente über ein PWM- Signal PWM- gesteuert ist, mit einem Anweisungs- Tastverhältnis, das die Hälfte des Anweisungs- Tastverhältnisses beträgt, handelt.

5. Verfahren nach Anspruch 4, wobei der bürstenlose Motor in einem Wischanlage enthalten ist, die weiterhin beinhaltet:
einen Wischerarm, der schwenkend vom bürstenlosen Motor bewegt wird; und
einem Wischerblatt, verbunden mit dem Wischerarm, um abwechselnd einen Wischbereich eines Fahrzeugs zu wischen,
wobei
das Energieversorgungsmuster geschaltet wird, wenn eine Position des Wischerblattes eine Umkehrposition im Wischbereich erreicht hat.

6. Verfahren nach Anspruch 5,
wobei das Steuergerät (12) die Zahl der Wischbewegungen der Wischerblätter im Rechteckwellen- Energieversorgungsmuster zählt und vom Rechteckwellen-Energieversorgungsmuster in das lastlose Energieversorgungsmuster schaltet, wenn die Anzahl der Wischbewegungen gleich einem oder größer als ein vorher festgelegter Wert ist.

## Revendications

1. Moteur sans balai, comprenant :
un stator (14) comprenant des enroulements triphasés (14u, 14v, 14w) ;
un rotor (13) comprenant un aimant permanent, le rotor (13) étant configuré de manière à tourner dans un état faisant face au stator (14) ;
des capteurs à effet Hall (15u, 15v, 15w) qui sont configurés de manière à détecter une position de rotation du rotor (13) ;
un inverseur (11) qui comprend une pluralité d'éléments de commutation, l'inverseur (11) étant configuré de manière à conduire un courant alternatif jusqu'aux enroulements triphasés (14u, 14v, 14w) en activant ou en désactivant la pluralité d'éléments de commutation ; et
un dispositif de commande (12) qui est configuré de manière à commander les états activé ou désactivé de la pluralité d'éléments de commutation en commutant un motif d'excitation, qui représente des variations dans les états d'excitation des phases des enroulements triphasés (14u, 14v, 14w) suivant la rotation du rotor (13), sur un un motif d'excitation non libre ou un motif d'excitation à ondes rectangulaires, dans lequel le dispositif de commande (12) est configuré de manière à commuter le motif d'excitation sur le motif d'excitation non libre lorsqu'une valeur de charge accumulée est inférieure à une première valeur de seuil prédéterminée et à commuter le motif d'excitation sur le motif d'excitation à ondes rectangulaires lorsque la valeur de charge accumulée est égale ou supérieure à la première valeur de seuil prédéterminée,
dans lequel la valeur de charge accumulée est calculée en accumulant une valeur de charge relative à une vitesse de rotation du rotor (13),
dans lequel le motif d'excitation à ondes rectangulaires comprend un motif d'excitation qui est une combinaison d'un premier état qui est un état dans lequel au moins un des éléments de commutation est constamment actif, d'un deuxième état qui est un état dans lequel au moins un autre des éléments de commutation est constamment inactif, et d'un troisième état qui est un état dans lequel au moins encore un autre des éléments de commutation est commandé en PWM, et
le moteur sans balai est **caractérisé en ce que** le motif d'excitation non libre comprend un motif d'excitation qui est une combinaison d'un septième état qui est un état dans lequel au moins un des éléments de commutation est constamment actif, d'un huitième état qui est un état dans lequel au moins un autre des éléments de commutation est commandé en PWM par un signal PWM d'un rapport cyclique d'instruction qui est entré depuis l'extérieur, et d'un neuvième état qui est un état dans lequel au moins encore un autre des éléments de commutation est commandé en PWM par un signal PWM d'un rapport cyclique qui est égal à la moitié du rapport cyclique d'instruction.

2. Moteur sans balai selon la revendication 1, dans lequel le dispositif de commande (12) est configuré de manière à commuter le motif d'excitation sur le motif d'excitation non libre lorsque la valeur de charge accumulée devient inférieure à une seconde valeur de seuil prédéterminée qui est inférieure à la première valeur de seuil prédéterminée après que la valeur de charge accumulée soit devenue égale ou supérieur à la première valeur de seuil prédéterminée.

3. Moteur sans balai selon l'une quelconque des revendications 1 à 2, dans lequel la valeur de charge accumulée est obtenue en détectant, à des intervalles prédéterminés, une tension d'alimentation électrique qui est fournie à l'inverseur (11), une vitesse de rotation du rotor (13) ainsi qu'un rapport cyclique d'un signal PWM dans un état commandé en PWM parmi des états d'excitation inclus dans le motif d'excitation non libre ou le motif d'excitation à ondes rectangulaires et en accumulant une valeur de point de charge qui est calculée sur la base de la tension d'alimentation électrique détectée, de la vitesse de rotation et du rapport cyclique.

4. Procédé de commande d'un moteur sans balai, le moteur sans balai comprenant :
un stator (14) comprenant des enroulements triphasés (14u, 14v, 14w) ;
un rotor (13) comprenant un aimant permanent, le rotor (13) étant configuré de manière à tourner dans un état faisant face au stator (14) ;
des capteurs à effet Hall (15u, 15v, 15w) qui sont configurés de manière à détecter une position de rotation du rotor (13) ;
un inverseur (11) qui comprend une pluralité d'éléments de commutation, l'inverseur (11) étant configuré de manière à conduire un courant alternatif jusqu'aux enroulements triphasés (14u, 14v, 14w) en activant ou en désactivant la pluralité d'éléments de commutation ; et
un dispositif de commande (12) qui est configuré de manière à commander les états activé ou désactivé de la pluralité d'éléments de commutation en commutant un motif d'excitation, qui représente des variations dans les états d'excitation de phases des enroulements triphasés (14u, 14v, 14w) suivant la rotation du rotor (13), sur un motif d'excitation non libre ou un motif d'excitation à ondes rectangulaires,
le procédé comprenant les étapes suivantes :
le dispositif de commande (12) commute le motif d'excitation sur le motif d'excitation non libre lorsqu'une valeur de charge accumulée est inférieure à une première valeur de seuil prédéterminée ;
commuter le motif d'excitation sur le motif d'excitation à ondes rectangulaires lorsque la valeur de charge accumulée est égale ou supérieure à la première valeur de seuil prédéterminée ; et
calculer la charge de valeur accumulée en accumulant une valeur de charge calculée sur la base d'une vitesse de rotation du rotor (13),
dans lequel le motif d'excitation à ondes rectangulaires comprend un motif d'excitation qui est une combinaison d'un premier état qui est un état dans lequel au moins un des éléments de commutation est constamment actif, d'un deuxième état qui est un état dans lequel au moins un autre des éléments de commutation est constamment inactif, et d'un troisième état qui est un état dans lequel au moins encore un autre des éléments de commutation est commandé en PWM, et
le procédé étant **caractérisé en ce que** le motif d'excitation non libre comprend un motif d'excitation qui est une combinaison d'un septième état qui est un état dans lequel au moins un des éléments de commutation est constamment actif, d'un huitième état qui est un état dans lequel au moins un autre des éléments de commutation est commandé en PWM par un signal PWM d'un rapport cyclique d'instruction qui est entré depuis l'extérieur, et d'un neuvième état qui est un état dans lequel au moins encore un autre des éléments de commutation est commandé en PWM par un signal PWM d'un rapport cyclique qui est égal à la moitié du rapport cyclique d'instruction.

5. Procédé selon la revendication 4, dans lequel le moteur sans balai est incorporé à l'intérieur d'un dispositif d'essuie-glace qui comprend en outre :
un bras d'essuie-glace qui est déplacé de façon pivotante par le moteur sans balai ; et
un balai d'essuie-glace qui est connecté au bras d'essuie-glace dans le but d'essuyer en exécutant un déplacement réciproque une zone d'essuyage d'un véhicule,
dans lequel le motif d'excitation est commuté lorsqu'une position du balai d'essuie-glace se trouve dans une position d'inversion à l'intérieur de la zone d'essuyage.

6. Procédé selon la revendication 5, dans lequel le dispositif de commande (12) compte le nombre d'essuyages du balai d'essuie-glaces dans le motif d'excitation à ondes rectangulaires, et passe du motif d'excitation à ondes rectangulaires au motif d'excitation non libre lorsque le nombre d'essuyages est égal à ou supérieur à une valeur prédéterminée.
